# EUROPEAN PATENT APPLICATION

(11) **EP 4 844 638 A1**
(43) Date of publication of application: **25.11.2026**
(21) Application number: 26166660.6
(22) Date of filing: 23.03.2026
(51) Int. Cl.: G06N 3/091, G06N 3/045

(54) **ANNOTATION SAMPLING WITH RESCALED PROBABILITY ESTIMATES**

(30) Priority: 21.05.2025 US 202563809966 P; 03.02.2026 US 202619468984
(71) Applicant: Bytedance Technology Ltd., KY1 - 1205 Grand Cayman Cayman Islands (KY)
(72) Inventor: LIN, Lequan, Sydney, 2000 (AU); CHEN, Qiuzheng, Sydney, 2000 (AU); CHEN, Feng, Sydney, 2000 (AU); LI, Zhaoyang, Syndey, 2000 (AU); LI, Jiawen, Sydney, 2000 (AU); ZHANG, Jiyuan, Sydney, 2000 (AU); SUN, Zhenbang, Sydney, 2000 (AU)
(74) Representative: Marks & Clerk LLP

(57) **Abstract**

A computing system (10) including one or more processing devices (12) configured to receive data inputs (22), by inputting the data inputs into an annotator generative language model (30), obtain machine annotations (34) that each include a corresponding label (26). By inputting the data inputs and machine annotations into a critic generative language model (40), the one or more processing devices obtain annotation critiques (44) that each include a respective error probability estimate (48). The one or more processing devices compute rescaled error probability estimates (50) and sampling from a Bernoulli distribution (52) to obtain the first subset (60). A second subset (66) includes the data inputs not included in the first subset. The one or more processing devices transmit the first subset to an annotation user interface (62) and receive human annotations (64). The one or more processing devices train a machine learning model (72) via supervised learning (74) using a training dataset (70) that includes the data inputs, the human annotations, and the machine annotations.

## Description

### FIELD

This disclosure relates to the field of computer technology, such as a computing system and a method for use with a computing system.

### BACKGROUND

Supervised learning is a category of machine learning (ML) model training approaches in which an ML model is trained using a training dataset that includes training inputs paired with ground-truth outputs. Over the course of training, the ML model learns a mapping between those training inputs and the corresponding ground-truth outputs. For example, supervised learning may be used to train a classifier model that matches inputs to respective classes selected from a set of predefined classes. Supervised learning may also be used to fine-tune a generative language model in order to obtain a model specialized in a particular language-based task.

Supervised learning frequently relies on high-quality labeled data, but obtaining such data through human annotation can be both expensive and time-consuming. Some recent approaches to training dataset generation have used generative language models to annotate sets of training inputs. However, model-generated annotations frequently have lower accuracy than annotations selected by human labelers.

### SUMMARY

According to one aspect of the present disclosure, a computing system is provided, including one or more processing devices configured to receive a plurality of data inputs. At least in part by inputting the data inputs into an annotator generative language model, the one or more processing devices are further configured to obtain a respective plurality of machine annotations that each include a corresponding label selected from among a plurality of predefined labels. At least in part by inputting the data inputs and the corresponding machine annotations into a critic generative language model, the one or more processing devices are further configured to obtain a plurality of annotation critiques that each include a respective error probability estimate associated with the corresponding label. The one or more processing devices are further configured to select a first subset and a second subset of the plurality of data inputs at least in part by computing a plurality of rescaled error probability estimates based at least in part on the error probability estimates and sampling from a Bernoulli distribution over the rescaled error probability estimates to obtain the data inputs included in the first subset. The second subset includes the data inputs that are not included in the first subset. The one or more processing devices are further configured to transmit the first subset of the data inputs to an annotation user interface. The one or more processing devices are further configured to receive, via the annotation user interface, a respective plurality of human annotations of the data inputs included in the first subset. The one or more processing devices are further configured to train a machine learning model via supervised learning using a training dataset that includes the plurality of data inputs, the respective human annotations of the data inputs included in the first subset, and the respective machine annotations of the data inputs included in the second subset.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows an example computing system at which one or more processing devices are configured to receive an input dataset, query an annotator generative language model, and query a critic generative language model, according to one example embodiment.
FIG. 2 schematically shows the computing system when the one or more processing devices are configured to select a first subset and a second subset of the plurality of data inputs, according to the example of FIG. 1.
FIG. 3 shows plots of annotation accuracy for naïve annotation and CoT annotation, according to the example of FIG. 2.
FIGS. 4A-4C show plots of area under budget sensitivity (ABS) obtained using different black-box and white-box critic techniques, according to the example of FIG. 2.
FIG. 5 shows plots of ABS for different critic generative language models as a function of annotation accuracy, according to the example of FIG. 1.
FIG. 6 schematically shows the computing system when the one or more processing devices are further configured to train an ML model via supervised learning, according to the example of FIG. 2.
FIG. 7 schematically shows the computing system when the one or more processing devices are further configured to execute the ML model subsequently to training, according to the example of FIG. 6.
FIG. 8A shows a flowchart of a method for use with a computing system to annotate an input dataset and train an ML model, according to the example of FIG. 1.
FIGS. 8B-8E show additional steps of the method of FIG. 8A that may be performed in some examples.
FIG. 9 shows a schematic view of an example computing environment in which a computing system of FIG. 1 may be instantiated.

### DETAILED DESCRIPTION

In order to address the above challenges with existing data annotation approaches used in supervised learning, a training data generation pipeline is provided. In this training data generation pipeline, a generative language model is used to compute annotations of input data. A generative language model is also used to compute annotation critiques in order to identify potential errors in the annotations.

The techniques discussed herein further include sampling a subset of the data inputs for labeling by human annotators. This subset is selected using an approach that may reduce the number of data inputs labeled by the human annotators while maintaining high benchmark performance for the trained classifier. In the experiments discussed below, the sampling techniques discussed herein resulted in performance reductions of approximately 2% on most of the tested benchmarks, compared to classifiers trained exclusively on human-labeled data, despite using human labeling for only around 10-30% of the training dataset. The techniques provided herein may therefore achieve a significant decrease in the time and costs associated with human annotation without incurring a large decrease in classifier performance.

The following discussion provides a formal description of annotated dataset generation. For a space of unlabeled data denoted as *X,* labels are selected from a finite space of labels *Y.* The labeled dataset is denoted as D = {(**x***ᵢ*, *yᵢ*) | **x***ᵢ* ∈ *X, yᵢ* ∈ *Y, i* ∈ 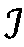 }, where the ground truth label *yᵢ* is assumed to be fixed but unknown, and where 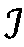 = {1,2, ... , *N}* is a set of indices. Data annotation processes are formulated as functions from the functional space 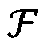 = *{f: X* → *Y*} that map the unlabeled data to labels. Given a dataset *D,* the optimal data annotation *f** ∈ 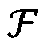 satisfies *f**(***x**ᵢ*) = *yᵢ,* ∀*i* ∈ 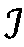 . The sets of human annotations and machine annotations are further denoted as 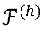 ⊂ 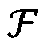 and 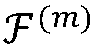 ⊂ 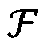 , respectively. Without loss of generality, a representative human annotator *f*^{(*h*)} ∈ 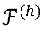 and machine annotator *f*^{(*m*)} ∈ 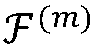 are considered in following discussions. *ŷᵢ* ^{(*h*)} = *f*^{(*h*)}(**x***ᵢ*) and *ŷᵢ*^{(*m*)} *= f*^{(*m*)}(**x***ᵢ*) are defined as the human- and machine-annotated label, respectively.

A scalar function *Q:* 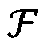 × 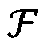 → [*Q*ₘᵢₙ, *Q*ₘₐₓ] is defined as the annotation quality measure for a function in 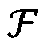 , where higher value indicates higher quality. Formally, the annotation quality of an annotation method *f* ∈ 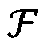 is computed as follows: $Q \left(f*,f\right) = {E}_{x ∈ X} \left[s\left(f*\left(x\right),f\left(x\right)\right)\right] \approx \frac{1}{N} {\sum }_{i ∈ J} s \left(f*\left({x}_{i}\right),f\left({x}_{i}\right)\right) ,$ (1) where s(·,·) is a similarity function defined on the label space, such as 0-1 loss when Q indicates accuracy. According to the above equation, *Q*(*f**,*f**) ≥ *Q*(*f**,*f*^{(*h*)}) *> Q*(*f**,*f*^{(*m*)}), indicating that human annotation is more accurate than machine annotation. The following discussion assumes that ${\hat{y}}_{i}^{\left(h\right)} = {y}_{i}$ for most if not all *i* ∈ 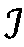 , and thus *Q*(*f***, f*^{(*h*)}) ≈ *Q*(*f*, f**) = *Q*ₘₐₓ·

*δ* ∈ {0,1}*^{N}* is defined as a machine error indicator, where *δᵢ* = 1 means ${y}_{i} \neq {\hat{y}}_{i}^{\left(m\right)}$, and 0 otherwise. The refinement of the machine annotations may be indicated with a correction operator, *κ_{δ}*[*f*^{(*m*)}](**x***ᵢ*) *=* (1 *- δᵢ*)*f*^{(*m*)}(***x**ᵢ*) + *δᵢf**(***x**ᵢ*). Since, as discussed above, ${\hat{y}}_{i}^{\left(h\right)} = {y}_{i}$ for most if not all *i* ∈ 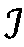 *,* the correction operator can be approximated by the human-correction operator, ${κ}_{δ} \left[{f}^{\left(m\right)}\right] \left({x}_{i}\right) \approx {κ}_{δ}^{\left(h\right)} \left[{f}^{\left(m\right)}\right] \left({x}_{i}\right) = \left(1-{δ}_{i}\right) {f}^{\left(m\right)} \left({x}_{i}\right) + {δ}_{i} {f}^{\left(h\right)} \left({x}_{i}\right)$ . The task of correcting the machine annotations may accordingly be expressed as the following optimization problem: ${max}_{δ} Q \left(f*,{κ}_{δ}^{\left(h\right)}\left[{f}^{\left(m\right)}\right]\right) .$ (2) The solution to the above optimization problem is the Kronecker delta *δ*_{*y,ŷ*(m)}, such that ${δ}_{{y}_{i} , {\hat{y}}_{i}^{\left(m\right)}} = 1$ if ${y}_{i} \neq {\hat{y}}_{i}^{\left(m\right)}$ , and 0 otherwise. This Kronecker delta indicates that the erroneous machine-annotated labels are replaced with ground-truth labels.

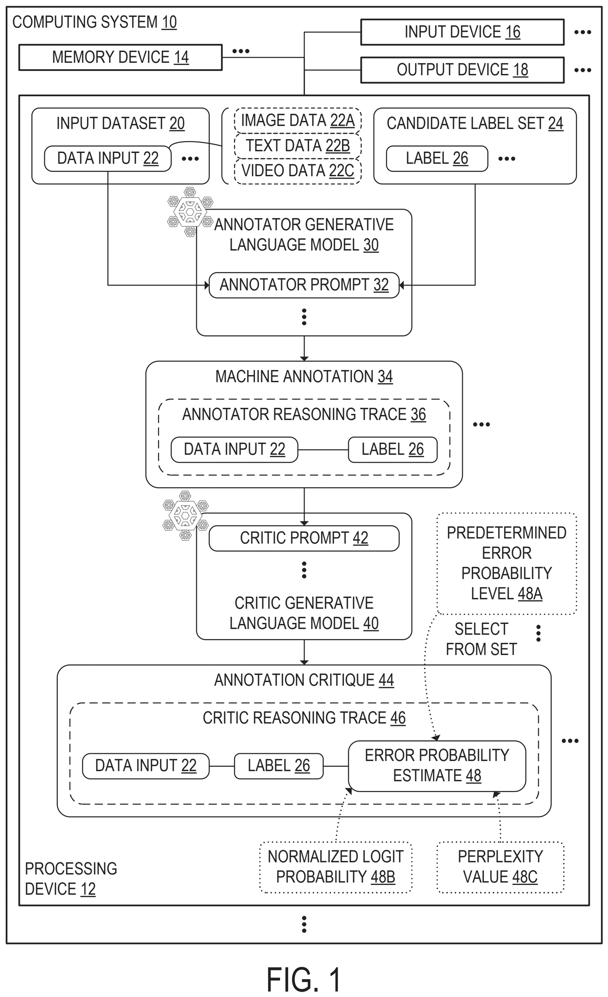

FIG. 1 schematically shows an example computing system 10 at which one or more processing devices 12 are configured to receive an input dataset 20, query an annotator generative language model 30, and query a critic generative language model 40. For example, the one or more processing devices 12 may include one or more central processing units (CPUs), graphics processing units (GPUs), neural processing units (NPUs), and/or other types of processing hardware devices. The computing system 10 further includes one or more memory devices 14, which may include volatile memory and/or non-volatile storage. In the example of FIG. 1, the computing system 10 further includes one or more input devices 16 and one or more output devices 18 via which a user may interact with the computing system 10 over a user interface.

In some examples, the computing system 10 may be instantiated across a plurality of physical computing devices. For example, the one or more processing devices 12 and/or the one or more memory devices 14 may be distributed among a plurality of physical computing devices that are located in a data center and are used to instantiate a virtual computing device. In some examples, the annotator generative language model 30 and the critic generative language model 40 may be executed at a separate physical computing device, or a plurality of separate physical computing devices, from the other computing processes discussed herein.

The one or more processing devices 12 are configured to receive an input dataset 20 that includes a plurality of data inputs 22. For example, the input dataset 20 may include image data 22A and/or text data 22B. In examples in which the input dataset 20 includes image data 22A, that image data 22A may be included in video data 22C, in which each video received as a data input 22 includes a respective plurality of images. Other types of data inputs 22, such as audio data, may also be included in the input dataset 20 in some examples.

In the example of FIG. 1, the one or more processing devices 12 are configured to compute training data for a classification task of assigning labels 26 to respective inputs. The labels 26 are selected from among a plurality of predefined labels 26 included in a candidate label set 24. In order to label the data inputs 22, the one or more processing devices 12 are configured to obtain a respective plurality of machine annotations 34 at least in part by inputting the data inputs 22 into the annotator generative language model 30. Each of the data inputs 22 may be input into a corresponding annotator prompt 32 that further includes the candidate label set 24, along with instructions for the annotator generative language model 30 to select a label 26 from the candidate label set 24 to apply to the data input 22.

As discussed above, the annotator generative language model 30 may be executed locally or remotely. In some examples, the annotator generative language model 30 may be a white-box model, which is a model for which the one or more processing devices 12 have access to an internal model state. For example, the internal model state may include embeddings, activations, and/or logits computed internally to the annotator generative language model 30. In examples in which the annotator generative language model 30 is a white-box model, the one or more processing devices 12 may be configured to execute the annotator generative language model 30 locally. The one or more processing devices 12 may alternatively be configured to transmit and receive model inputs, model outputs, and internal state information of the annotator generative language model 30 via an application-programming interface (API). In other examples, the annotator generative language model 30 may be a black-box model for which internal model states are inaccessible to the one or more processing devices 12. In such examples, the annotator generative language model 30 is remotely executed and is configured to transmit model outputs to the one or more processing devices 12 without internal state data associated with those outputs.

In some examples, the annotator generative language model 30 may be a reasoning model. A reasoning model is a generative language model that has been specifically trained to compute its model outputs to have a chain-of-thought (CoT) or tree-of-thought (ToT) structure. For example, a reasoning model may be configured to generate a reasoning trace, including a plurality of reasoning tokens, at a model scratchpad prior to outputting a model output computed at the end of the reasoning trace. A reasoning model may, for example, be trained to generate CoT-structured outputs via supervised finetuning (SFT) or reinforcement learning with verifiable rewards (RLVR). In examples in which the annotator generative language model 30 is a reasoning model, for each of the data inputs 22 included in the input dataset 20, the one or more processing devices 12 may be further configured to obtain an annotator reasoning trace 36 from the annotator generative language model 30 when computing the machine annotation 34. The machine annotation 34 may, for example, include an annotator reasoning trace 36 in which the label 26 assigned to the data input 22 is the final output.

In some examples, the annotator generative language model 30 may be a multimodal generative language model that is configured to process image data in addition to text data as an input modality. The annotator generative language model 30 may accordingly be configured to annotate image data 22A included in the input dataset 20. The annotator generative language model 30 may also be configured to process on or more additional input modalities, such as audio input, and/or compute model outputs with a plurality of different available output modalities.

The one or more processing devices 12 are further configured to obtain a plurality of annotation critiques 44 at least in part by inputting the data inputs 22 and the corresponding machine annotations 34 into the critic generative language model 40. The annotation critiques 44 each include a respective error probability estimate 48 associated with the corresponding label 26. The error probability estimate 48 is an estimated probability that the machine annotation 34 applies an inaccurate label 26 to the data input 22. The one or more processing devices 12 may be configured to input, into the critic generative language model 40, a critic prompt 42 that includes the machine annotation 34, along with an instruction for the critic generative language model 40 to check the machine annotation 34 for accuracy or generate the error probability estimate 48. The critic generative language model 40 may also be a multimodal generative language model configured to process image data in addition to text data. In some examples, the annotator generative language model 30 may differ from the critic generative language model 40, whereas in other examples, the same generative language model may be used as both an annotator and a critic.

Returning to the formal description of data annotation, the critic generative language model 30 is represented below as a pretrained model g. The critic generative language model *g* is used to determine, for each data pair $\left({x}_{i}, {\hat{y}}_{i}^{\left(m\right)}\right)$, whether the annotator generative language model *f*^{(*m*)} assigns an incorrect label to the data input **x***ᵢ*. Instead of computing binary decisions, the critic generative language model *g* is queried to estimate the error probability. The true error probability is denoted as ${ϵ}_{i} = ℙ \left({y}_{i}\neq {\hat{y}}_{i}^{\left(m\right)}\left|{x}_{i}\right.\right)$, and the estimated error probability is denoted as ${\hat{ϵ}}_{i} = g \left({x}_{i}, {\hat{y}}_{i}^{\left(m\right)}\right)$.

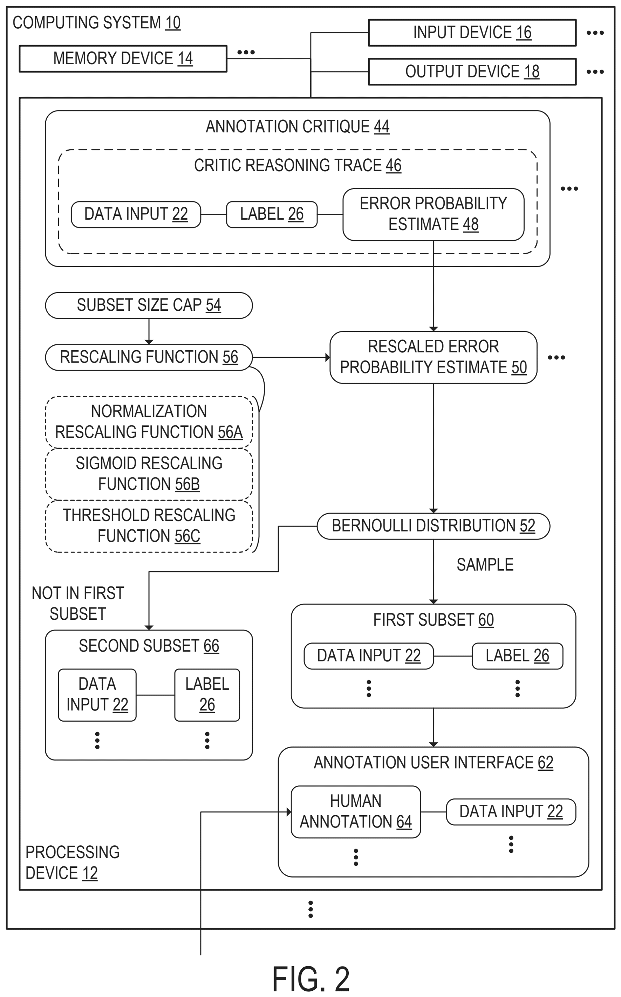

Turning now to FIG. 2, the computing system 10 is schematically shown when the one or more processing devices 12 are configured to select a first subset 60 and a second subset 66 of the plurality of data inputs 22. The one or more processing devices 12 are further configured to transmit the first subset 60 of the data inputs 22 to an annotation user interface 62 and receive, via the annotation user interface 62, a respective plurality of human annotations 64 of the data inputs 22 included in the first subset 60. In contrast, the second subset 66 includes the data inputs 22 that are not included in the first subset 60. The one or more processing devices 12 are configured to not transmit the second subset 66 to the annotation user interface 62. Thus, the one or more processing devices 12 are configured to selectively obtain human annotations 64 for a subset of the plurality of data inputs 22 in order to avoid costs associated with human annotation of the entire input dataset 20.

In the example of FIG. 2, the one or more processing devices 12 are further configured to receive a subset size cap 54, which is a predetermined maximum number of the data inputs 22 included in the first subset 60. For a given value *B* ≤ *N* of the subset size cap 54, where *N* is the total number of data inputs 22 included in the input dataset 20, a budget-aware sampling function *δ*(*B*) may be defined, where ${δ}_{i} \left(B\right) ∼ B \left({π}_{B}\left({\hat{ϵ}}_{i}\right)\right)$. Here, 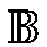 denotes the Bernoulli distribution, and *π_{B}*(·) is a rescaling function that adjusts the estimated error probability *ε̂ᵢ* based on the subset size cap *B,* such that 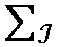 *δᵢ*(*B*) ≤ *B.*

As shown in the example of FIG. 2, the one or more processing devices 12 are further configured to execute a rescaling function 56 to compute a plurality of rescaled error probability estimates 50 based at least in part on the error probability estimates 48. The one or more processing devices 12 are further configured to use the subset size cap 54 as an input to the rescaling function 56. The one or more processing devices 12 are further configured to sample from a Bernoulli distribution 52 over the rescaled error probability estimates 50 to obtain the data inputs 22 included in the first subset 60. The one or more processing devices 12 are accordingly configured to select the data inputs 22 included in the first subset 60 in a manner that identifies machine annotations 34 with high error probabilities while also keeping the number of data inputs 22 in the first subset 60 below the subset size cap 54.

The rescaling function 56 may, for example, be a normalization rescaling function 56A, a sigmoid rescaling function 56B, or a threshold rescaling function 56C. These rescaling functions 56 are discussed in further detail below.

In examples in which the rescaling function 56 is the normalization rescaling function 56A, the rescaling function may be *π_{B}*(*ε̂ᵢ*) *=* (*B* × *ε̂ᵢ*) / 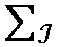 *ε̂ᵢ*. This normalization imposes the condition that 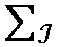 *δᵢ*(*B*) ≤ *B.* Thus, the one or more processing devices 12 are configured to compute the rescaled error probability estimates 50 in such examples by normalizing the error probability estimates 50 and multiplying the normalized error probability estimates by the subset size cap 54.

In examples in which the rescaling function 56 is the sigmoid rescaling function 56B, the one or more processing devices 12 are configured to compute the rescaled error probability estimates 50 as respective values of a sigmoid function of the error probability estimates 48. The sigmoid rescaling function 56B may be *π_{B}*(*ε̂ᵢ*) *=* 1/(1 + *e*^{*-β*(*ε̂i*-α)}), where *α* ∈ [0,1] and $β ∈ {ℝ}_{+}$ are hyperparameters that control the center and sharpness of the rescaling function 56. The hyperparameters *α* and *β* are set such that the rescaling function satisfies 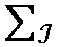 *δᵢ*(*B*) ≤ *B.*

In examples in which the rescaling function 56 is the threshold rescaling function 56C, the one or more processing devices 12 are configured to compute the rescaled error probability estimates 50 at least in part by selecting the data inputs 22 with respective error probability estimates 48 above a predetermined probability threshold. The threshold rescaling function 56C may be *π_{B}*(*ε̂ᵢ*) = **1**(*ε̂ᵢ* ≥ τ), where *τ* is a sampling threshold chosen such that 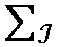 *δᵢ*(*B*) ≤ *B.* The threshold rescaling function 56C is a special case of the sigmoid rescaling function 56B in which α = τ and *β* → ∞.

The optimization problem in equation (2) may be modified to account for the subset size cap 54. The modified optimization problem may be expressed as follows: ${max}_{δ \left(B\right)} Q \left(f*,{κ}_{δ \left(B\right)}^{\left(h\right)}\left[{f}^{\left(m\right)}\right]\right) , s . t . {\sum }_{i ∈ J} {δ}_{i} \left(B\right) \leq B$ (3) where ${κ}_{δ \left(B\right)}^{\left(h\right)} \left[{f}^{\left(m\right)}\right] \left({x}_{i}\right) = \left(1-{δ}_{i}\left(B\right)\right) {f}^{\left(m\right)} \left({x}_{i}\right) + {δ}_{i} \left(B\right) {f}^{\left(h\right)} \left({x}_{i}\right)$ is a subset-size-constrained human-correction operator.

In the experiments discussed below, the following metrics were used to determine the effectiveness of different generative language models, prompting techniques, and error probability estimate rescaling. Two metrics are utilized: annotation quality gain (AQG), which measures the increase in annotation accuracy compared to machine-only annotation, and (2) area under budget sensitivity (ABS), which measures the overall efficiency of utilizing the first subset 60 given a fixed subset size cap 54. In these metrics, *f** is approximated with *f*^{(*h*)}, given that the ground truth is assumed to be unknown.

AQG is defined as follows. For an annotator generative language model *f*^{(*m*)}, a critic generative language model *g,* a correction operator ${κ}_{δ \left(B\right)}^{\left(h\right)}$ with a subset size cap *B,* an error indicator ${δ}_{i} \left(B\right) ∼ B \left({π}_{B}\left({\hat{ϵ}}_{i}\right)\right)$, and error probability estimates *ε̂ᵢ* = *g*(***x**ᵢ, f*^{(*m*)}(**x***ᵢ*)), the AQG is given by: $AQG \left({f}^{\left(m\right)}, g, B\right) = \frac{Q \left(f*,{κ}_{δ \left(B\right)}^{\left(h\right)}\left[{f}^{\left(m\right)}\right]\right) - Q \left(f*,{f}^{\left(m\right)}\right)}{{Q}_{max} - Q \left(f*,{f}^{\left(m\right)}\right)}$ (4) where the denominator *Q*ₘₐₓ - *Q*(*f*,f^{(m)}* scales AQG into range [0,1]. The error indicator *δᵢ*(*B*) is equal to 1 for each data input 22 that is sampled into the first subset 60 and is equal to 0 for each data input 22 that is instead included in the second subset 66.

A proportion of the first subset 60 to the total size of the input dataset 20 is indicated as *b* ∈ [0,1], such that *B = [bNJ,* where $\left⌊⋅\right⌋$ is the floor operator. For an annotator generative language model *f*^{(*m*)} and a critic generative language model g, the ABS is defined as: $ABS \left({f}^{\left(m\right)}, g\right) = {\int }_{0}^{1} AQG \left({f}^{\left(m\right)}, g, \left⌊bN\right⌋\right) db \approx \frac{1}{N} {\sum }_{B = 0}^{N} AQG \left({f}^{\left(m\right)}, g, B\right)$ (5)

Returning to FIG. 1, example approaches to error probability estimation using the critic generative language model 30 are discussed below.

In some examples, at least in part by querying the critic generative language model 40, the one or more processing devices 12 may be configured to select each of the error probability estimates 48 from a set of predetermined error probability levels 48A. For example, the one or more processing devices 12 may be configured to prompt the critic generative language model 40 to select an error level from a set of predefined error levels from 1 to 5, where a higher error level corresponds to a higher error probability.

Similarly to the annotator generative language model 30, the critic generative language model 40 may be a reasoning model. In such examples, for each of the data inputs 22, the corresponding annotation critique 44 may further include a critic reasoning trace 46 computed at the critic generative language model 40. For example, the error probability estimate 48 may be a final output of the critic reasoning trace 46.

In examples in which the annotator generative language model 30 is a reasoning model and in which the one or more processing devices 12 are configured to obtain the annotator reasoning trace 36, the one or more processing devices 12 may be further configured to compute the error probability estimate 48 based at least in part on the annotator reasoning trace 36. For example, the annotator reasoning trace 36 may be included in the critic prompt 42, along with instructions for the critic generative language model 40 to assess the annotator reasoning trace 36 and estimate the error probability based on that assessment.

In other examples in which the critic generative language model 40 is a white-box model, the one or more processing devices 12 may be configured to compute the error probability estimates 48 of the data inputs 22 as normalized logit probabilities 48B of the critic generative language model 40. To compute the normalized logit probabilities 48B, the one or more processing devices 12 may be configured to prompt the critic generative language model 40 whether the machine annotation 34 includes an error. The one or more processing devices 12 may be further configured to obtain the respective logits of a "yes" token and a "no" token and compute the error probability estimate 48 according to the following equation: $\hat{ϵ} = ℙ \left("yes"\right) / \left(ℙ\left("yes"\right)+ℙ\left("no"\right)\right)$ (6)

In some examples in which the critic generative language model 40 is a white-box model and the annotation critiques 44 include respective critic reasoning traces 46, the one or more processing devices 12 may be configured to compute the error probability estimates 48 of the data inputs 22 as perplexity values 48C of the critic reasoning traces 46. In examples in which the error probability estimates 48 are perplexity values 48C, the perplexity values 48C are indirect estimates of error probability. In examples in which the error probability estimates 48 are the perplexity values 48C, the one or more processing devices 12 are configured to use the threshold rescaling function 56C, since the perplexity values 48C are indirect estimates of error probability. During sampling, the data values 22 may be prioritized according to the following selection order: $↓ PPL \left(CoT\left|"yes\right."\right) ≻ ↑ PPL \left(CoT\left|"yes\right."\right) ≻ ↑ PPL \left(CoT\left|"no\right."\right) ≻ ↓ PPL \left(CoT\left|"no\right."\right) ,$ (7) where PPL( CoT | "yes") and PPL( CoT | "no") correspond to the perplexity of the critic reasoning trace 46 in examples in which the critic generative language model 40 returns "yes" and "no," respectively. ↑ and ↓ respectively refer to higher and lower perplexity values, and > indicates higher priority in the sampling process.

In the experiments that were conducted to measure annotation quality, the annotation tasks included image classification (on the CIFAR10, Fashion-MNIST, and Stanford Cars datasets), text classification (on Emotion and Irony datasets) and visual question-answering (VQA) (on the closed-ended VQA-RAD dataset). Six multimodal generative language models were tested, including three black-box models (BB1, BB2, and BB3) and three white-box models (WB1, WB2, and WB3). The sampling hyperparameters were set to p = 0.9, *t* = 0.7, *k* = 50, and a maximum of 500 new tokens, when applicable.

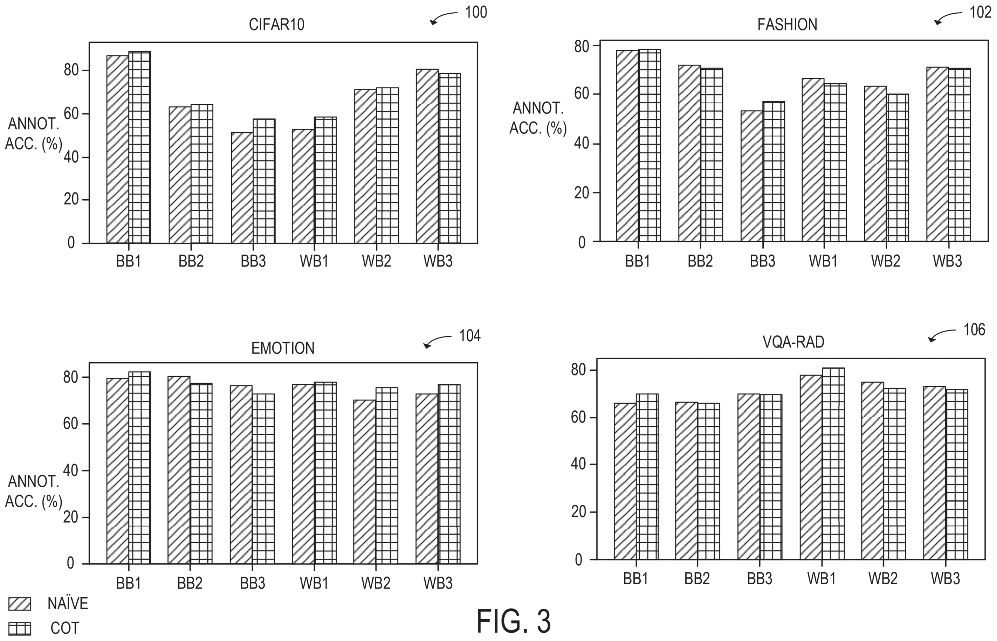

In one experiment, naive annotation was compared to CoT annotation. FIG. 3 shows plots 100, 102, 104, and 106 of annotation accuracy for naïve annotation and CoT annotation. Naive annotation and CoT annotation were tested with models BB1, BB2, BB3, WB1, WB2, and WB3. The plots 100, 102, 104, and 106 show respective results on the CIFAR10, Fashion, Emotion, and VQA-RAD benchmarks. This experiment found that BB1 had the highest overall annotation accuracy on the CIFAR10, Fashion, and Emotion benchmarks, whereas WB1 had the highest annotation accuracy on VQA-RAD. This experiment found small increases in annotation accuracy when CoT annotation was used, although this increase was also not consistent across all the tested models and benchmarks.

In another experiment, four different black-box critic prompting strategies were tested:
Naive estimation: the critic generative language model 40 directly estimates the error probability from the given data input 22 and label 26. Maps the data input 22 and the label 26 to an error probability estimate 48.

CoT: the critic generative language model 40 outputs step-by-step reasoning and an error probability. Maps the data input 22 and the label 26 to a critic reasoning trace 46 and an error probability estimate 48.

Multiple choice: the critic generative language model 40 selects an error level from among a plurality of predefined error levels from 1 through 5, where a higher level indicates a higher error probability. Maps the data input 22 and the label 26 to a critic reasoning trace 46 and an estimated error level.

Annotator CoT criticism: the critic generative language model 40 processes the annotator reasoning trace 36 and estimates the error probability. Maps the data input 22 and the annotator reasoning trace 36 to a critic reasoning trace 46 and an error probability estimate 48.

The following tables show the performance of the black-box critic prompting strategies on the benchmarks discussed above, with ABS (%) as the metric.

### CIFAR10:

| | BB1 | BB2 | BB3 | WB1 | WB2 | WB3 |
|---|---|---|---|---|---|---|
| Naïve | 75.5 | 54.2 | 59.7 | 59.6 | 53.3 | 65.9 |
| CoT | 78.3 | 76.7 | 66.8 | 63.0 | 67.0 | 78.5 |
| MC | 73.2 | 75.4 | 66.2 | 60.9 | 67.0 | 80.3 |
| CoT crit | 69.7 | 74.6 | 61.2 | 61.7 | 71.0 | 75.4 |

### Fashion:

| | BB1 | BB2 | BB3 | WB1 | WB2 | WB3 |
|---|---|---|---|---|---|---|
| Naïve | 67.9 | 57.1 | 54.9 | 53.3 | 51.8 | 58.7 |
| CoT | 70.0 | **72.0** | 59.5 | 58.3 | 60.8 | 65.7 |
| MC | 64.8 | 67.3 | 54.8 | 54.0 | 59.3 | 63.9 |
| CoT crit | 65.4 | 71.8 | 60.2 | 58.9 | 64.0 | 66.4 |

### Cars:

| | BB1 | BB2 | BB3 | WB1 | WB2 | WB3 |
|---|---|---|---|---|---|---|
| Naïve | 62.6 | 54.7 | 54.5 | 54.1 | 54.8 | 49.9 |
| CoT | 60.6 | **70.9** | 53.2 | 55.9 | 54.5 | 57.5 |
| MC | 59.1 | 66.2 | 53.1 | 54.5 | 60.9 | 56.2 |
| CoT crit | 62.0 | 67.4 | 47.4 | 54.9 | 56.8 | 57.5 |

### Emotion:

| | BB1 | BB2 | BB3 | WB1 | WB2 | WB3 |
|---|---|---|---|---|---|---|
| Naïve | 64.9 | 70.1 | 70.6 | 60.0 | 59.2 | 56.1 |
| CoT | 72.8 | **72.9** | 72.4 | 66.6 | 58.7 | 66.8 |
| MC | 71.2 | 69.8 | 69.5 | 67.1 | 64.0 | 68.9 |
| CoT crit | 64.4 | 67.0 | 72.0 | 61.0 | 61.7 | 67.4 |

### Irony:

| | BB1 | BB2 | BB3 | WB1 | WB2 | WB3 |
|---|---|---|---|---|---|---|
| Naïve | 51.5 | 51.2 | 55.5 | 53.6 | 52.0 | 51.3 |
| CoT | 55.5 | 57.3 | **63.2** | 52.4 | 54.6 | 53.9 |
| MC | 55.6 | 56.9 | 60.6 | 53.5 | 55.5 | 55.8 |
| CoT crit | 57.6 | 55.4 | 61.6 | 53.3 | 55.4 | 55.9 |

### VQA-RAD:

| | BB1 | BB2 | BB3 | WB1 | WB2 | WB3 |
|---|---|---|---|---|---|---|
| Naïve | 63.8 | 53.8 | **65.0** | 57.0 | 61.5 | 55.2 |
| CoT | 64.4 | 59.8 | 64.7 | 63.2 | 64.6 | 63.0 |
| MC | 58.0 | 54.9 | 58.8 | 54.9 | 63.9 | 56.5 |
| CoT crit | 62.0 | 63.4 | 64.9 | 61.9 | 63.6 | 64.2 |

The above tables show that the CoT technique leads to an overall increase in the ABS that the critic generative language model 40 achieves, compared to naive, multiple-choice, and annotator CoT criticism. CoT has the highest ABS of the tested techniques on four of the six benchmarks.

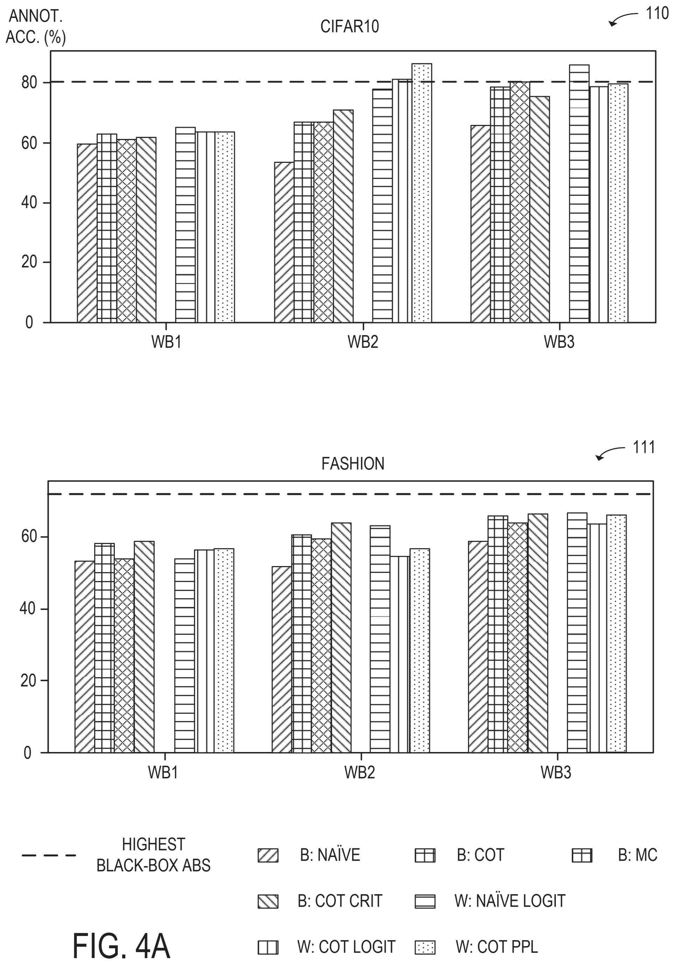

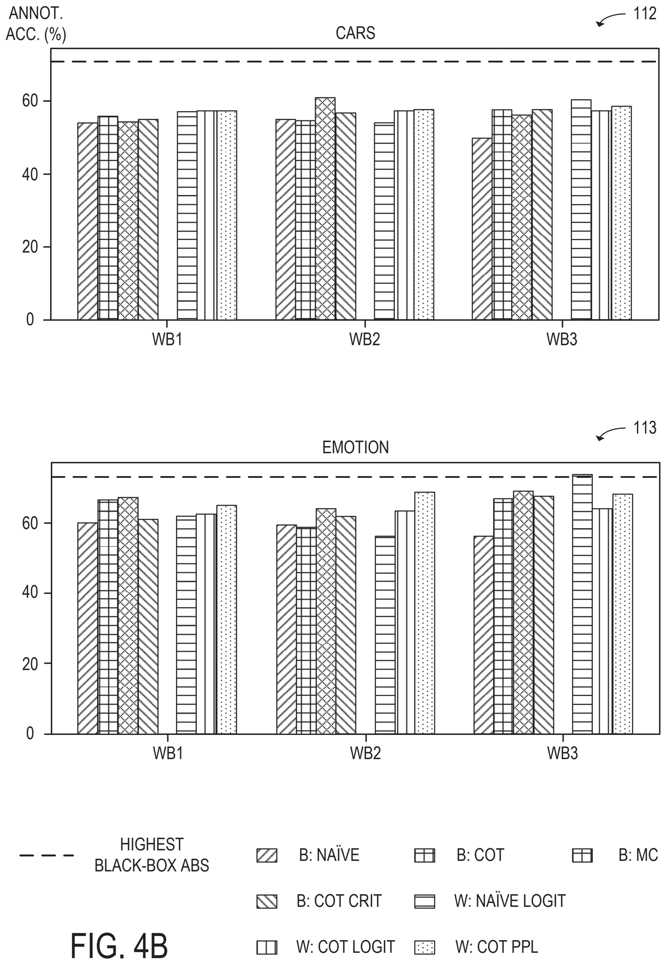

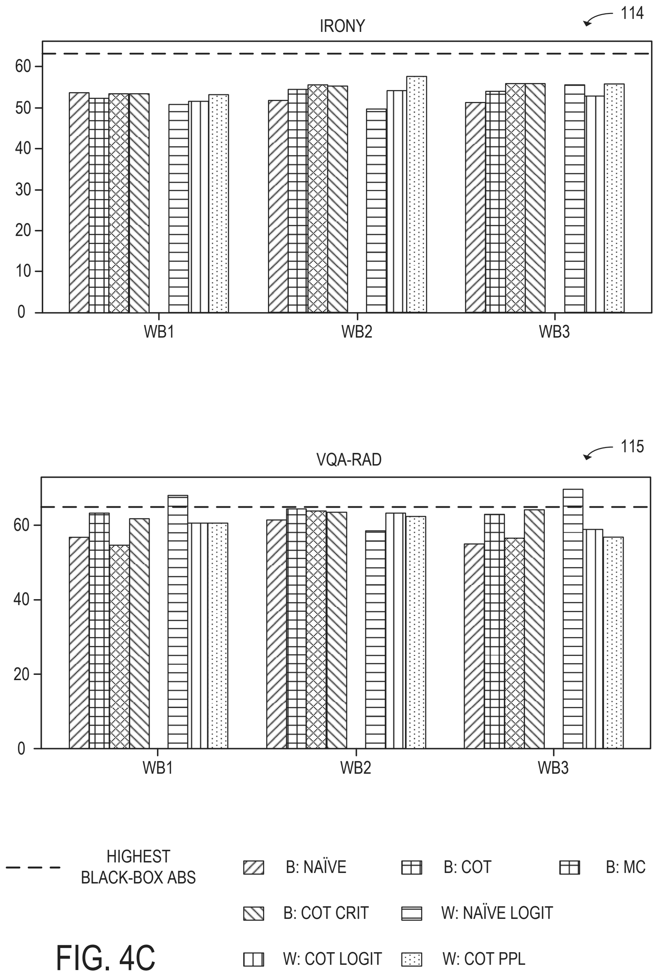

Another experiment compared black-box critic techniques, including naive, CoT, multiple-choice, and annotator CoT criticism, to white-box critic techniques, including naive error probability estimation with normalized logit probabilities, CoT error probability estimation with normalized logit probabilities, and CoT perplexity value estimation. This experiment tested models WB1, WB2, and WB3 using each of the above critic techniques. FIGS. 4A-4C show plots 110, 111, 112, 113, 114, and 115 of ABS percentages obtained on the CIFAR10, Fashion, Cars, Emotion, Irony, and VQA-RAD benchmarks, respectively. In addition, the plots 110, 111, 112, 113, 114, and 115 show the highest ABS obtained on the corresponding benchmark by a black-box model using a black-box critic technique. This experiment found that white-box methods outperformed black-box methods on only two of the six datasets, CIFAR10 and VQA-RAD.

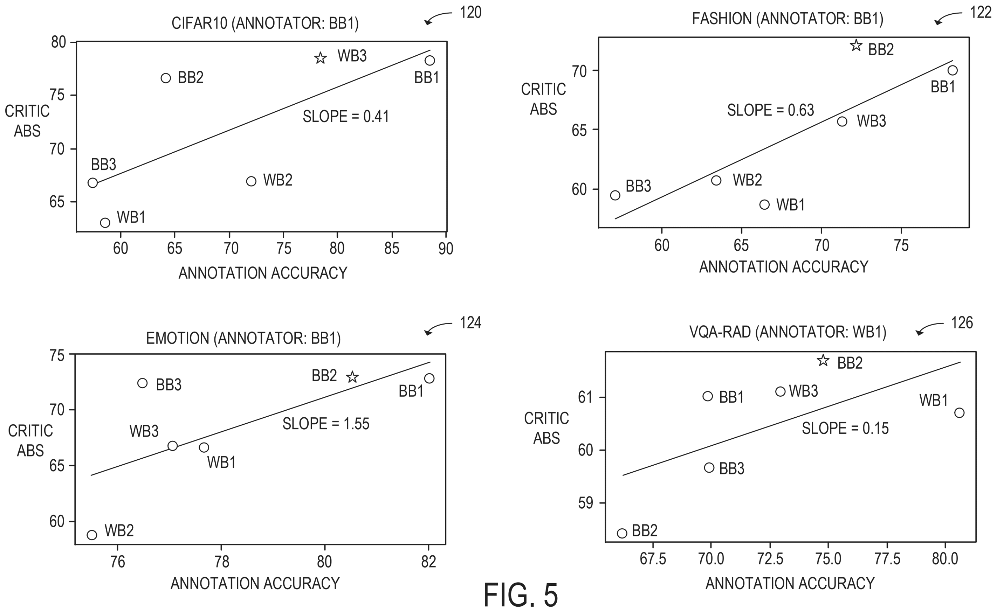

Another experiment compared the effectiveness of using the same generative language model as both the annotator generative language model 30 and the critic generative language model 40, compared to using different generative language models in the two roles. FIG. 5 shows plots 120, 122, 124, and 126 of critic ABS (%) as a function of annotation accuracy (%) for different critic generative language models 40 across the CIFAR10, Fashion, Emotion, and VQA-RAD benchmarks. In each of these plots, the annotator generative language model 30 and the critic generative language model 40 both use CoT generation. BB1 is the annotator generative language model 30 for the CIFAR10, Fashion, and Emotion benchmarks, and WB1 is the annotator generative language model 30 for the VQA-RAD benchmark.

The plots 120, 122, 124, and 126 shown in FIG. 5 demonstrate that critic performance, as measured by ABS, is positively correlated with annotation accuracy. Across the four tested datasets, the highest ABS scores were reached when using the highest-accuracy annotator as the annotator generative language model 30 and using the second-highest-accuracy annotator as the critic generative language model 40. Using different generative language models as the annotator and the critic may accordingly increase the performance of the annotation pipeline compared to using the same generative language model as both the annotator and the critic.

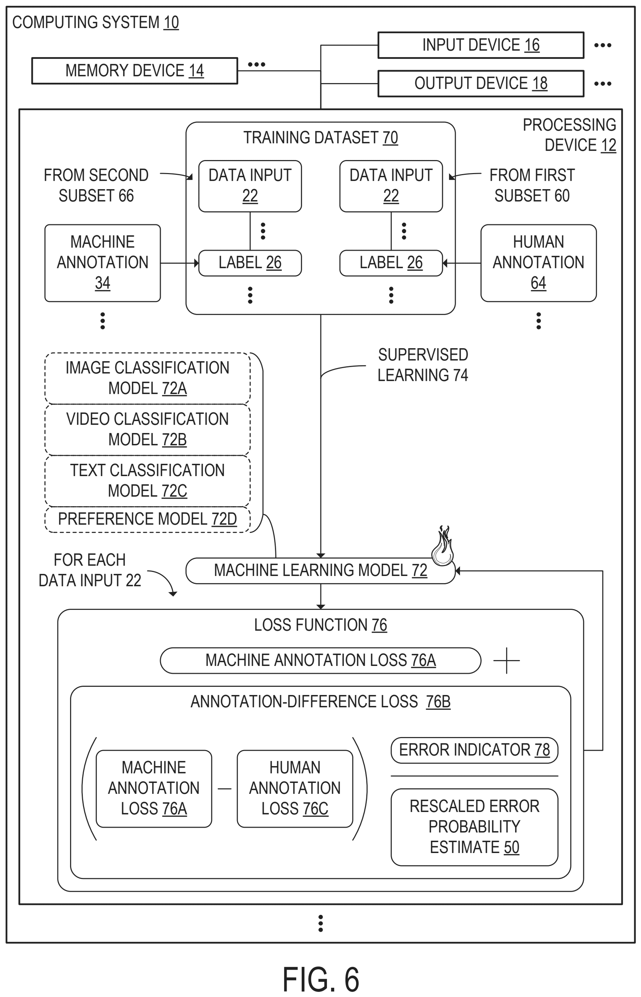

FIG. 6 schematically shows the computing system 10 when the one or more processing devices 12 are further configured to train an ML model 72 via supervised learning 74. For example, the ML model 72 may be an image classification model 72A, a video classification model 72B, a text classification model 72C, or a preference model 72D. The ML model 72 is trained using a training dataset 70 that includes the plurality of data inputs 22, the respective human annotations 64 of the data inputs 22 included in the first subset 60, and the respective machine annotations 34 of the data inputs 22 included in the second subset 66.

In the example of FIG. 6, the ML model 72 is trained using a loss function 76 computed as follows: ${L}_{θ}^{\left(ACT\right)} = \frac{1}{N} {\sum }_{i = 1}^{N} \left({l}_{θ , i}^{\left(m\right)}+\left({l}_{θ , i}-{l}_{θ , i}^{\left(m\right)}\right)\frac{{δ}_{i} \left(B\right)}{{π}_{B} \left({\hat{ϵ}}_{i}\right)}\right)$ (8) where ℓ*_{θ}* and ${l}_{θ}^{\left(m\right)}$ are losses computed with ground truth and machine-annotated data, respectively, and ${δ}_{i} \left(B\right) ∼ B \left({π}_{B}\left({\hat{ϵ}}_{i}\right)\right)$ is the error indicator discussed above. Thus, the loss function 76 includes, for each of the data inputs 22, a machine annotation loss 76A computed for that data input 22. The loss function 76 further includes an annotation-difference loss 76B proportional to a difference between a human annotation loss 76C and the machine annotation loss 76A, multiplied by an error indicator 78 for that data input 22 and divided by the rescaled error probability estimate 50 for that data input 22. Due to the multiplication by the error indicator 78, the annotation-difference loss 76B is equal to 0 for each of the data inputs 22 included in the second subset 66 (i.e., the data inputs 22 that have machine annotations 34 but no human annotations 64).

The loss function 76 discussed above has the following statistical properties. For a *µ*-strongly convex loss ${L}_{θ} = E \left({l}_{θ}\left(x, y\right)\right)$, and for a loss ${l}_{θ}^{\left(m\right)} = {l}_{θ} \left(x, {\hat{y}}^{\left(m\right)}\right)$ computed with the machine annotations 34, the loss function 76 defined in Equation (8) is an unbiased loss estimate: $E \left({L}_{θ}^{\left(ACT\right)}\right) = {L}_{θ}$. The variance of ${L}_{θ}^{\left(ACT\right)}$ is given by: $Var \left({L}_{θ}^{\left(ACT\right)}\right) = \frac{1}{N} Var \left({l}_{θ}\right) + E \left[{\left({l}_{θ}-{l}_{θ}^{\left(m\right)}\right)}^{2}\left(\frac{1}{{π}_{B} \left(\hat{ϵ}\right)}-1\right)\right] .$ (9)

While the loss function 76 is an unbiased estimate of the ground truth loss, the variance of the loss function 76 is minimized when the second term in Equation (9) equals to 0. This minimization condition can be satisfied or approximately satisfied with: (1) a perfect machine annotator: the machine annotations 34 are perfectly accurate such that ${l}_{θ}^{\left(m\right)} = {l}_{θ}^{\left(h\right)} \approx {l}_{θ}$; or (2) an astute machine critic: when the machine annotations 34 have imperfect accuracy, the second term of Equation (9) can be reduced by accurate error probability estimation, i.e., *π_{B}*(*ε̂*) → 1 when machine annotation 34 includes a mistake.

The three rescaling approaches discussed above may result in different training outcomes. For a given annotator generative language model 30, the upper bound of the gap between parameters learned with the loss function 76 and parameters learned with the ground-truth loss is determined by q, the lower bound of the rescaled error values of the human-annotated data inputs. A small q increases the likelihood of a large parameter gap and therefore of low model performance. The normalization rescaling function 56A may perform poorly when the subset size cap 54 is small, since *π_{B}*(*ε̂ᵢ*) *= (B* × *ε̂ᵢ*)/ 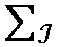 *ε̂ᵢ* becomes close to 0 (*q* → 0) when *B* is small compared to the total number of errors among the plurality of machine annotations 34. In contrast, the sigmoid rescaling function 56B and the threshold rescaling function 56C map the error probability estimates 48 of the data inputs 22 to values closer to 1 (*q* → 1). The sigmoid rescaling function 56B and the threshold rescaling function 56C may accordingly have a smaller parameter gap, resulting in trained ML model performance closer to the performance with a ground-truth training dataset.

For a dataset size *N,* a *µ*-strongly convex loss *ℓ_{θ},* and constants *q, C* > 0 such that the rescaled error probability estimates *π_{B}*(*ε̂ᵢ*) ≥ *q* for all *i* with *δᵢ(B)* = 1, and the gradient gap $\left‖∇{l}_{θ , i}^{\left(m\right)}-∇{l}_{θ , i}\right‖ \leq C$ for all *i* ∈ {1,2, ... , N}, then the following inequality holds: $\left‖{θ}_{∗}^{\left(ACT\right)}-{θ}_{∗}\right‖ \leq \sqrt{\frac{8 {c}_{1} log \left(\frac{2}{p}\right)}{{μ}^{2} N}}$ (10) where ${θ}_{∗}^{\left(ACT\right)} = arg {min}_{θ} {L}_{θ}^{\left(ACT\right)} , {θ}_{∗} = arg {min}_{θ} {L}_{θ}$, and *c*₁ *=* (1 *- q*)*C*²/*q.*

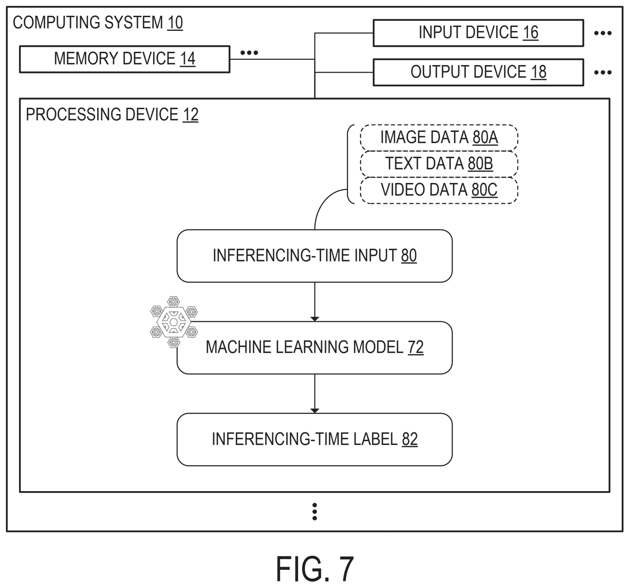

FIG. 7 schematically shows the computing system 10 when the one or more processing devices 12 are further configured to execute the ML model 72 subsequently to training performed according to the example of FIG. 6. The one or more processing devices 12 are further configured to receive an inferencing-time input 80, which may, for example, include image data 80A, text data 80B, or video data 80C. The one or more processing devices 12 are further configured to execute the ML model 72 to process the inferencing-time input 80 to compute an inferencing-time label 82. The one or more processing devices 12 are further configured to output the inferencing-time label 82.

Experiments were conducted across different input data sampling and loss function combinations. In these experiments, a cross-entropy loss was used as *ℓ_{θ}*. In addition, a power-tuning hyperparameter was applied to the loss function of Equation (8). BB1 with the default settings was used as both the annotator generative language model 30 and the critic generative language model 40, and CoT generation was performed at BB1 during both annotation and criticism. The subset size cap 54 was determined according to the annotation accuracy of BB1. The proportion b of the input dataset 20 that was selected for human annotation was set to the proportion of the input dataset 20 that BB1 labeled incorrectly. This proportion b was treated as a ground-truth proportion, although in practice, the subset size cap 54 would be set based on available resources. The ML models that were trained in these experiments were ResNet18 for the CIFAR10, Fashion, and Cars benchmarks; RoBERTa for the Emotion and Irony benchmarks; and BLIP-VQA for the VQA-RAD benchmark.

The following table shows the results of the ML model training experiments:

| Training data - loss | CIFAR10 | Fashion | Cars | Emotion | Irony | VQA-RAD |
|---|---|---|---|---|---|---|
| Human only - cross-entropy loss | 88.66 + 0.97 | 93.01 ± 0.63 | 87.88 ± 0.36 | 81.82 ± 0.57 | 70.18 ± 3.23 | 67.81 ± 1.47 |
| Machine only - cross-entropy loss | 81.55 ± 1.93 | 82.86 ± 0.84 | 83.68 ± 0.17 | 78.96 + 2.40 | 60.71 ± 5.43 | 61.03 ± 2.05 |
| Resampled data - cross-entropy loss | 85.59 ± 0.52 | 87.50 ± 0.86 | 85.88 ± 0.26 | 80.82 ± 1.08 | 67.83 ± 2.82 | 61.83 ± 3.27 |
| Resampled data - Eq. (8) norm. loss | 64.70 ± 5.46 | 69.27 ± 7.25 | 11.54 ± 0.96 | 79.87 + 0.88 | 65.66 ± 2.00 | 62.55 ± 3.01 |
| Resampled data - Eq. (8) sig. loss | 87.73 ± 0.36 | 89.73 ± 0.35 | 86.19 ± 0.14 | 81.44 ± 0.51 | 68.49 ± 3.20 | 67.73 ± 1.33 |
| Resampled data - Eq. (8) thre. loss | 87.95 + 0.35 | 89.16 ± 0.89 | 86.00 ± 0.26 | 81.41 ± 0.64 | 68.21 ± 1.94 | 67.02 ± 1.32 |
| Human-machine perf. gap (%) | 7.11% | 10.15% | 4.20% | 2.86% | 9.47% | 6.87% |
| Human-resampled perf. gap (%) | 0.71% | 3.28% | 1.69% | 0.38% | 1.69% | 0.08% |
| Proportion *b* (%) | 11.52% | 21.81% | 9.56% | 17.98% | 33.79% | 30.15% |

As shown in the above table, training solely on machine-annotated data yields 4.07% to 10.15% lower accuracy compared to training solely on human-annotated data. The resampling approach discussed above, together with the loss function of Equation (8), achieved similar performance to training solely on human-annotated data, but with around 10-30% of the input dataset receiving human review. In addition, sigmoid (sig.) and thresholding (thre.) sampling outperform normalization (norm.) sampling, especially when the subset size cap is low. On the Cars benchmark, where the proportion b = 9.56%, normalization sampling achieves only 11.54% accuracy, resulting in a 49.10% gap in accuracy relative to fully human-labeled data. In contrast, the other two sampling methods reduce the gap to 1.76% and 1.87%, respectively. Overall, sigmoid weighting and thresholding have similar performance. Although sigmoid weighting often has slightly higher performance, thresholding is simpler to implement due to the threshold *τ* requiring less testing to select compared to the hyperparameters α and *β* of the sigmoid function.

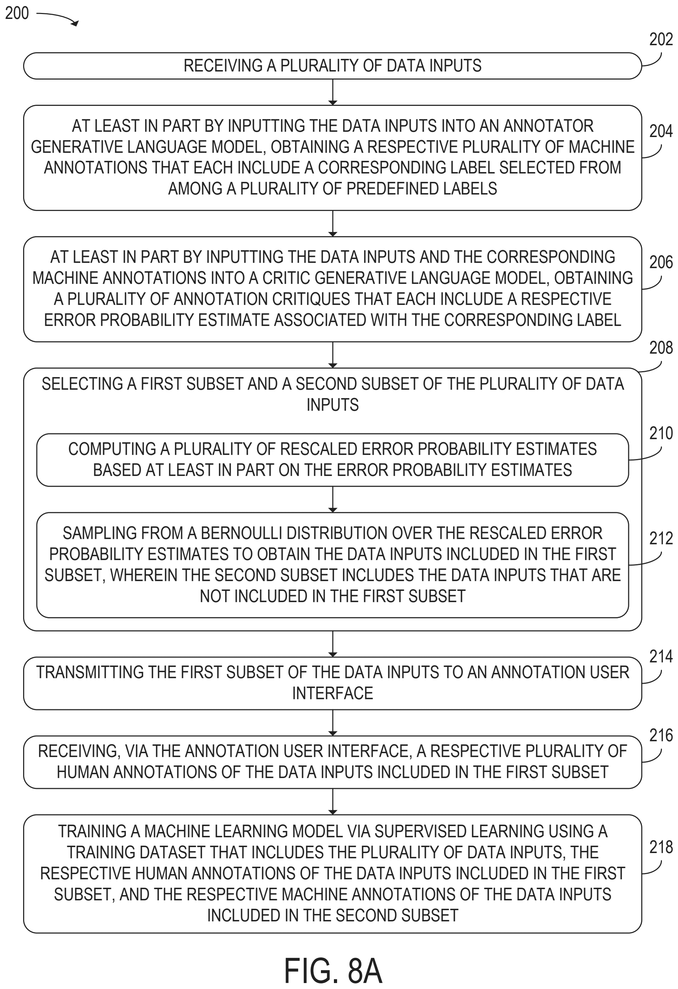

FIG. 8A shows a flowchart of a method 200 for use with a computing system to annotate an input dataset and train an ML model. At step 202, the method 200 includes receiving a plurality of data inputs. For example, the data inputs may include image data, text data, and/or video data.

At step 204, the method 200 further includes obtaining a respective plurality of machine annotations at least in part by inputting the data inputs into an annotator generative language model. The machine annotations each include a corresponding label selected from among a plurality of predefined labels. Step 204 may include, for each of the data inputs, prompting the annotator generative language model with an annotator prompt that includes the data input, a candidate label set that includes each of the predefined labels, and an instruction to select a label that matches the data input.

At step 206, the method 200 further includes obtaining a plurality of annotation critiques at least in part by inputting the data inputs and the corresponding machine annotations into a critic generative language model. The annotation critiques each include a respective error probability estimate associated with the corresponding label included in the machine annotation. Step 206 may include, for each of the data inputs, prompting the critic generative language model with a critic prompt that includes the data input, the label, and an instruction to estimate an error probability of the label. In some examples, the annotator generative language model differs from the critic generative language model, whereas in other examples, the same generative language model may be used as both the annotator and the critic.

At step 208, the method 200 further includes selecting a first subset and a second subset of the plurality of data inputs. Selecting the subsets at step 208 includes, at step 210, computing a plurality of rescaled error probability estimates based at least in part on the error probability estimates. At step 212, step 208 further includes sampling from a Bernoulli distribution over the rescaled error probability estimates to obtain the data inputs included in the first subset. The second subset includes the data inputs that are not included in the first subset.

At step 214, the method 200 further includes transmitting the first subset of the data inputs to an annotation user interface. At step 216, the method 200 further includes receiving, via the annotation user interface, a respective plurality of human annotations of the data inputs included in the first subset. Thus, human annotators may confirm or correct the machine annotations of the data inputs included in the first subset. In contrast to the first subset, the data inputs included in the second subset are not transmitted to the annotation user interface.

At step 218, the method 200 further includes training an ML model via supervised learning. The ML model is trained using a training dataset that includes the plurality of data inputs, the respective human annotations of the data inputs included in the first subset, and the respective machine annotations of the data inputs included in the second subset. The annotation steps of the method 200 are accordingly used to obtain a set of labeled training data with decreased reliance on human annotation but with higher labeling accuracy than solely using machine-annotated data. The time and costs associated with training the ML model may therefore be reduced without resulting in a large drop in model performance.

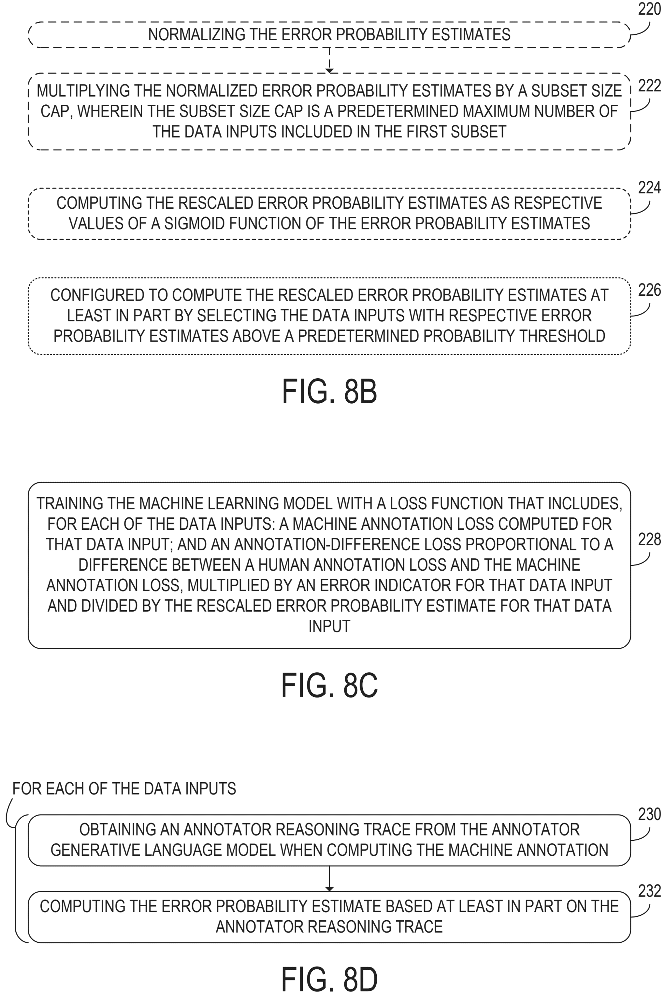

FIGS. 8B-8E show additional steps of the method 200 that may be performed in some examples. FIG. 8B shows example steps that may be performed when computing the rescaled error probability estimates at step 210 in order to constrain the number of data inputs in the first subset to within a subset size cap. The subset size cap, in such examples, is a predetermined maximum number of the data inputs included in the first subset.

At step 220, step 210 may include normalizing the error probability estimates. In examples in which step 220 is performed, step 210 may further include, at step 222, multiplying the normalized error probability estimates by the subset size cap.

In other examples, at step 224, step 210 may include computing the rescaled error probability estimates as respective values of a sigmoid function of the error probability estimates. The sigmoid function may have hyperparameters that are selected such that the number of data inputs included in the first subset remains below the subset size cap.

In other examples, at step 226, step 210 may include selecting the data inputs with respective error probability estimates above a predetermined probability threshold. The Bernoulli distribution may then be computed from the selected data inputs, omitting the data inputs with error probability estimates below the predetermined probability threshold.

FIG. 8C shows a step of the method 200 that may be performed to train the ML model at step 218. At step 228, the method 200 may include training the ML model with a loss function that includes, for each of the data inputs, a machine annotation loss computed for that data input. For each of the data inputs, the loss function may further include an annotation-difference loss proportional to a difference between a human annotation loss and the machine annotation loss, multiplied by an error indicator for that data input and divided by the rescaled error probability estimate for that data input. The error indicator is equal to 1 when the data input is included in the first subset and is equal to 0 when the data input is included in the second subset. Thus, the loss function accounts for the accuracy of the ML model at reproducing the machine annotation, and, when the machine annotation differs from the human annotation, the difference in loss between those annotations.

FIG. 8D shows additional steps of the method 200 that may be performed for each of the data inputs. At step 230, the method 200 may further include obtaining an annotator reasoning trace from the annotator generative language model when computing the machine annotation. At step 232, the method 200 may further include computing the error probability estimate based at least in part on the annotator reasoning trace. Thus, the critic generative language model may use the annotator reasoning trace as additional context data when determining whether the machine annotation is accurate.

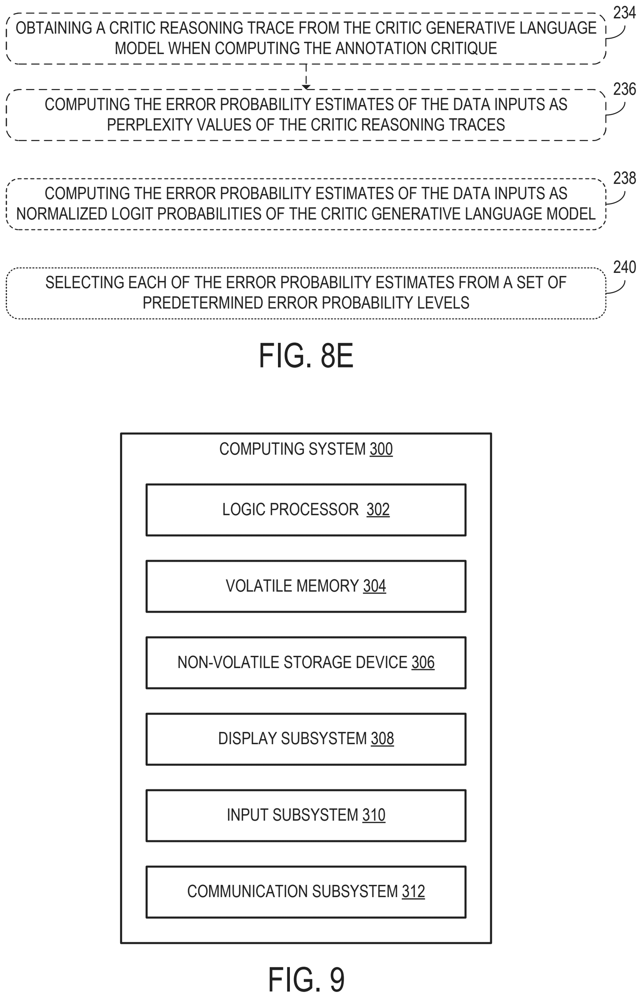

FIG. 8E shows example steps of the method 200 that may be performed when computing the error probability estimates at step 206. At step 234, step 206 may include obtaining a critic reasoning trace from the critic generative language model when computing the annotation critique. At step 236, step 206 may further include computing the error probability estimates of the data inputs as perplexity values of the critic reasoning traces. In such examples, the perplexity values are indirect indicators of the error probability rather than explicit error probability estimates.

In other examples, at step 238, step 206 may further include computing the error probability estimates of the data inputs as normalized logit probabilities of the critic generative language model. The normalized logit probability computed for a data input may be a logit probability of a "yes" token, divided by the sum of the logit probabilities of a "yes" token and a "no" token.

In other examples, at step 240, step 206 may further include selecting each of the error probability estimates from a set of predetermined error probability levels. The predetermined error probability levels may be explicit or implicit indicators of respective error probability ranges.

The systems and methods discussed above provide a pipeline in which data inputs are annotated and the annotated data inputs are used to train an ML model via supervised learning. Constructing the annotated dataset includes computing machine annotations of the data inputs, estimating the error probabilities those machine annotations, and transmitting data inputs to human annotators if those data inputs are estimated to have high error probabilities. Data inputs are sampled for transmission to the human annotators in a manner that accounts for a subset size cap on the subset of the data inputs transmitted to the human annotators. The experiments discussed above found that an ML model trained on data inputs sampled using these sampling techniques achieved approximately the same accuracy as an ML model trained solely on human-labeled data, despite only using human annotations for approximately 10-30% of the data inputs in the training dataset.

FIG. 9 schematically shows a non-limiting embodiment of a computing system 300 that can enact one or more of the methods and processes described above. Computing system 300 is shown in simplified form. Computing system 300 may embody the computing system described above and illustrated in FIG. 1 or other figures. Components of computing system 300 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 300 includes a logic processor 302 volatile memory 304, and a non-volatile storage device 306. Computing system 300 may optionally include a display subsystem 308, input subsystem 310, communication subsystem 312, and/or other components not shown in FIG. 9.

Logic processor 302 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the logic processor 302 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 306 includes one or more physical devices configured to hold instructions executable by the logic processors to implement the methods and processes described herein. When such methods and processes are implemented, the state of non-volatile storage device 306 may be transformed-e.g., to hold different data.

Non-volatile storage device 306 may include physical devices that are removable and/or built in. Non-volatile storage device 306 may include optical memory, semiconductor memory, and/or magnetic memory, or other mass storage device technology. Non-volatile storage device 306 may include nonvolatile, dynamic, static, read/write, read-only, sequential-access, location-addressable, file-addressable, and/or content-addressable devices. It will be appreciated that non-volatile storage device 306 is configured to hold instructions even when power is cut to the non-volatile storage device 306.

Volatile memory 304 may include physical devices that include random access memory. Volatile memory 304 is typically utilized by logic processor 302 to temporarily store information during processing of software instructions. It will be appreciated that volatile memory 304 typically does not continue to store instructions when power is cut to the volatile memory 304.

Aspects of logic processor 302, volatile memory 304, and non-volatile storage device 306 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 300 typically implemented in software by a processor to perform a particular function using portions of volatile memory, which function involves transformative processing that specially configures the processor to perform the function. Thus, a module, program, or engine may be instantiated via logic processor 302 executing instructions held by non-volatile storage device 306, using portions of volatile memory 304. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 308 may be used to present a visual representation of data held by non-volatile storage device 306. The visual representation may take the form of a graphical user interface (GUI). As the herein described methods and processes change the data held by the non-volatile storage device, and thus transform the state of the non-volatile storage device, the state of display subsystem 308 may likewise be transformed to visually represent changes in the underlying data. Display subsystem 308 may include one or more display devices utilizing virtually any type of technology. Such display devices may be combined with logic processor 302, volatile memory 304, and/or non-volatile storage device 306 in a shared enclosure, or such display devices may be peripheral display devices.

When included, input subsystem 310 may comprise or interface with one or more user-input devices such as a keyboard, mouse, touch screen, camera, or microphone.

When included, communication subsystem 312 may be configured to communicatively couple various computing devices described herein with each other, and with other devices. Communication subsystem 312 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 300 to send and/or receive messages to and/or from other devices via a network such as the Internet.

The following paragraphs discuss several aspects of the present disclosure. According to one aspect of the present disclosure, a computing system is provided, including one or more processing devices configured to receive a plurality of data inputs. At least in part by inputting the data inputs into an annotator generative language model, the one or more processing devices are further configured to obtain a respective plurality of machine annotations that each include a corresponding label selected from among a plurality of predefined labels. At least in part by inputting the data inputs and the corresponding machine annotations into a critic generative language model, the one or more processing devices are further configured to obtain a plurality of annotation critiques that each include a respective error probability estimate associated with the corresponding label. The one or more processing devices are further configured to select a first subset and a second subset of the plurality of data inputs at least in part by computing a plurality of rescaled error probability estimates based at least in part on the error probability estimates. Selecting the first subset and the second subset further includes sampling from a Bernoulli distribution over the rescaled error probability estimates to obtain the data inputs included in the first subset. The second subset includes the data inputs that are not included in the first subset. The one or more processing devices are further configured to transmit the first subset of the data inputs to an annotation user interface. The one or more processing devices are further configured to receive, via the annotation user interface, a respective plurality of human annotations of the data inputs included in the first subset. The one or more processing devices are further configured to train a machine learning model via supervised learning using a training dataset that includes the plurality of data inputs, the respective human annotations of the data inputs included in the first subset, and the respective machine annotations of the data inputs included in the second subset. The above features may have the technical effect of training the machine learning model with smaller amounts of human-annotated data while preserving model performance.

According to this aspect, the one or more processing devices are configured to compute the rescaled error probability estimates at least in part by normalizing the error probability estimates and multiplying the normalized error probability estimates by a subset size cap. The subset size cap is a predetermined maximum number of the data inputs included in the first subset. The above features may have the technical effect of selecting the first subset in a manner that identifies machine annotations with high error probabilities while also keeping the number of data inputs in the first subset below the subset size cap.

According to this aspect, the one or more processing devices may be configured to compute the rescaled error probability estimates as respective values of a sigmoid function of the error probability estimates. The above features may have the technical effect of rescaling the error probabilities in a manner that results in a trained machine learning model with a small parameter gap.

According to this aspect, the one or more processing devices may be configured to compute the rescaled error probability estimates at least in part by selecting the data inputs with respective error probability estimates above a predetermined probability threshold. The above features may have the technical effect of rescaling the error probability estimates while keeping the size of the first subset below the subset size cap.

According to this aspect, the one or more processing devices may be configured to train the machine learning model with a loss function that includes, for each of the data inputs, a machine annotation loss computed for that data input. The loss function may further include an annotation-difference loss proportional to a difference between a human annotation loss and the machine annotation loss, multiplied by an error indicator for that data input and divided by the rescaled error probability estimate for that data input. The above features may have the technical effect of training the machine learning model in a manner that accounts for the accuracy of the ML model at reproducing the machine annotation, and, when the machine annotation differs from the human annotation, the difference in loss between those annotations.

According to this aspect, for each of the data inputs, the one or more processing devices may be further configured to obtain an annotator reasoning trace from the annotator generative language model when computing the machine annotation. The one or more processing devices may be further configured to compute the error probability estimate based at least in part on the annotator reasoning trace. The above features may have the technical effect of using the annotator reasoning trace as additional context data at the critic generative language model when determining whether the machine annotation is accurate.

According to this aspect, for each of the data inputs, the annotation critique may further include a critic reasoning trace computed at the critic generative language model. The above features may have the technical effect of obtaining a more reliable accuracy determination from the critic generative language model.

According to this aspect, the one or more processing devices may be configured to compute the error probability estimates of the data inputs as perplexity values of the critic reasoning traces. The above features may have the technical effect of computing estimates of the error probability.

According to this aspect, the one or more processing devices may be configured to compute the error probability estimates of the data inputs as normalized logit probabilities of the critic generative language model. The above features may have the technical effect of computing estimates of the error probability.

According to this aspect, the one or more processing devices may be configured to select each of the error probability estimates from a set of predetermined error probability levels. The above features may have the technical effect of using the critic generative language model as a classifier over a discrete set of error probability levels.

According to this aspect, the annotator generative language model may differ from the critic generative language model. The above features may have the technical effect of increasing the performance of the annotation pipeline compared to using the same generative language model as both the annotator and the critic.

According to this aspect, the data inputs may each include image data. The annotator generative language model and the critic generative language model may be multimodal generative language models. The machine learning model may be an image classification model or a video classification model. The above features may have the technical effect of computing the training dataset to include images with text annotations.

According to another aspect of the present disclosure, a method for use with a computing system is provided. The method includes receiving a plurality of data inputs. The method further includes, at least in part by inputting the data inputs into an annotator generative language model, obtaining a respective plurality of machine annotations that each include a corresponding label selected from among a plurality of predefined labels. The method further includes, at least in part by inputting the data inputs and the corresponding machine annotations into a critic generative language model, obtaining a plurality of annotation critiques that each include a respective error probability estimate associated with the corresponding label. The method further includes selecting a first subset and a second subset of the plurality of data inputs at least in part by computing a plurality of rescaled error probability estimates based at least in part on the error probability estimates. Selecting the first subset and the second subset further includes sampling from a Bernoulli distribution over the rescaled error probability estimates to obtain the data inputs included in the first subset. The second subset includes the data inputs that are not included in the first subset. The method further includes transmitting the first subset of the data inputs to an annotation user interface. The method further includes receiving, via the annotation user interface, a respective plurality of human annotations of the data inputs included in the first subset. The method further includes training a machine learning model via supervised learning using a training dataset that includes the plurality of data inputs, the respective human annotations of the data inputs included in the first subset, and the respective machine annotations of the data inputs included in the second subset. The above features may have the technical effect of training the machine learning model with smaller amounts of human-annotated data while preserving model performance.

According to this aspect, computing the rescaled error probability estimates may include normalizing the error probability estimates and multiplying the normalized error probability estimates by a subset size cap. The subset size cap may be a predetermined maximum number of the data inputs included in the first subset. The above features may have the technical effect of selecting the first subset in a manner that identifies machine annotations with high error probabilities while also keeping the number of data inputs in the first subset below the subset size cap.

According to this aspect, the rescaled error probability estimates may be computed as respective values of a sigmoid function of the error probability estimates. The above features may have the technical effect of rescaling the error probabilities in a manner that results in a trained machine learning model with a small parameter gap.

According to this aspect, computing the rescaled error probability estimates may include selecting the data inputs with respective error probability estimates above a predetermined probability threshold. The above features may have the technical effect of rescaling the error probability estimates while keeping the size of the first subset below the subset size cap.

According to this aspect, the machine learning model may be trained with a loss function that includes, for each of the data inputs, a machine annotation loss computed for that data input. The loss function may further include an annotation-difference loss proportional to a difference between a human annotation loss and the machine annotation loss, multiplied by an error indicator for that data input and divided by the rescaled error probability estimate for that data input. The above features may have the technical effect of training the machine learning model in a manner that accounts for the accuracy of the ML model at reproducing the machine annotation, and, when the machine annotation differs from the human annotation, the difference in loss between those annotations.

According to this aspect, for each of the data inputs, the method may further include obtaining an annotator reasoning trace from the annotator generative language model when computing the machine annotation. The method may further include computing the error probability estimate based at least in part on the annotator reasoning trace. The above features may have the technical effect of using the annotator reasoning trace as additional context data at the critic generative language model when determining whether the machine annotation is accurate.

According to this aspect, the method may further include computing the error probability estimates of the data inputs as normalized logit probabilities of the critic generative language model. The above features may have the technical effect of computing estimates of the error probability.

According to another aspect of the present disclosure, a computing system is provided, including one or more processing devices configured to receive a plurality of data inputs. The one or more processing devices are further configured to receive a subset size cap. At least in part by inputting the data inputs into an annotator generative language model, the one or more processing devices are further configured to obtain a respective plurality of machine annotations that each include a corresponding label selected from among a plurality of predefined labels. At least in part by inputting the data inputs and the corresponding machine annotations into a critic generative language model, the one or more processing devices are further configured to obtain a plurality of annotation critiques that each include a respective error probability estimate associated with the corresponding label. The one or more processing devices are further configured to select a first subset and a second subset of the plurality of data inputs. The subset size cap is a predetermined maximum number of the data inputs included in the first subset. The second subset includes the data inputs that are not included in the first subset. Selecting the first subset includes computing a plurality of rescaled error probability estimates based at least in part on the error probability estimates and the subset size cap. Selecting the first subset further includes sampling over the rescaled error probability estimates to obtain the data inputs included in the first subset. The one or more processing devices are further configured to transmit the first subset of the data inputs to an annotation user interface. The one or more processing devices are further configured to receive, via the annotation user interface, a respective plurality of human annotations of the data inputs included in the first subset. The one or more processing devices are further configured to train a machine learning model via supervised learning using a training dataset that includes the plurality of data inputs, the respective human annotations of the data inputs included in the first subset, and the respective machine annotations of the data inputs included in the second subset. The above features may have the technical effect of training the machine learning model with smaller amounts of human-annotated data while preserving model performance.

"And/or" as used herein is defined as the inclusive or V, as specified by the following truth table:

| A | B | A ∨ B |
|---|---|---|
| True | True | True |
| True | False | True |
| False | True | True |
| False | False | False |

It will be understood that the configurations and/or approaches described herein are illustrative in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and subcombinations of the various processes, systems and configurations, and other features, functions, acts, and/or properties disclosed herein, as well as any and all equivalents thereof.

## Claims

1. A computing system (10) comprising:
one or more processing devices (12) configured to:
receive a plurality of data inputs (22);
at least in part by inputting the data inputs (22) into an annotator generative language model (30), obtain a respective plurality of machine annotations (34) that each include a corresponding label (26) selected from among a plurality of predefined labels (26);
at least in part by inputting the data inputs (22) and the corresponding machine annotations (34) into a critic generative language model (40), obtain a plurality of annotation critiques (44) that each include a respective error probability estimate (48) associated with the corresponding label (26);
select a first subset (60) and a second subset (66) of the plurality of data inputs at least in part by:
computing a plurality of rescaled error probability estimates (50) based at least in part on the error probability estimates (48); and
sampling from a Bernoulli distribution (52) over the rescaled error probability estimates (50) to obtain the data inputs included in the first subset (60), wherein the second subset (66) includes the data inputs (22) that are not included in the first subset (60);
transmit the first subset (60) of the data inputs (22) to an annotation user interface (62);
receive, via the annotation user interface (62), a respective plurality of human annotations (64) of the data inputs (22) included in the first subset (60); and
train a machine learning model (72) via supervised learning (74) using a training dataset (70) that includes the plurality of data inputs (22), the respective human annotations (64) of the data inputs (22) included in the first subset (60), and the respective machine annotations (34) of the data inputs (22) included in the second subset (66).

2. The computing system of claim 1, wherein the one or more processing devices (12) are configured to compute the rescaled error probability estimates (50) at least in part by:
normalizing the error probability estimates (48); and
multiplying the normalized error probability estimates by a subset size cap (54), wherein the subset size cap (54) is a predetermined maximum number of the data inputs (22) included in the first subset (60).

3. The computing system of claim 1, wherein the one or more processing devices (12) are configured to compute the rescaled error probability estimates (50) as respective values of a sigmoid function (56B) of the error probability estimates (56B); and/or
the one or more processing devices (12) are configured to compute the rescaled error probability estimates (50) at least in part by selecting the data inputs (22) with respective error probability estimates (56B) above a predetermined probability threshold.

4. The computing system of claim 1, wherein the one or more processing devices (12) are configured to train the machine learning model (72) with a loss function (76) that includes, for each of the data inputs (22):
a machine annotation loss (76A) computed for that data input (22); and
an annotation-difference loss (76B) proportional to a difference between a human annotation loss (76C) and the machine annotation loss (76A), multiplied by an error indicator (78) for that data input (22) and divided by the rescaled error probability estimate (50) for that data input (22).

5. The computing system of claim 1, wherein, for each of the data inputs (22), the one or more processing devices (12) are further configured to:
obtain an annotator reasoning trace (36) from the annotator generative language model (30) when computing the machine annotation (34); and
compute the error probability estimate (48) based at least in part on the annotator reasoning trace (36).

6. The computing system of claim 1, wherein, for each of the data inputs (22), the annotation critique (44) further includes a critic reasoning trace (46) computed at the critic generative language model (40), and optionally, wherein the one or more processing devices (12) are configured to compute the error probability estimates (48) of the data inputs (22) as perplexity values of the critic reasoning traces (46).

7. The computing system of claim 1, wherein the one or more processing devices (12) are configured to compute the error probability estimates (48) of the data inputs (22) as normalized logit probabilities of the critic generative language model (40); and/or
the one or more processing devices (12) are configured to select each of the error probability estimates (48) from a set of predetermined error probability levels (48A);

8. The computing system of claim **1,** wherein the annotator generative language model (30) differs from the critic generative language model (40).

9. The computing system of claim 1, wherein:
the data inputs (22) each include image data (22A);
the annotator generative language model (30) and the critic generative language model (40) are multimodal generative language models; and
the machine learning model (72) is an image classification model (72A) or a video classification model (72B).

10. A method for use with a computing system, the method comprising:
receiving a plurality of data inputs (22);
at least in part by inputting the data inputs (22) into an annotator generative language model (30), obtaining a respective plurality of machine annotations (34) that each include a corresponding label (26) selected from among a plurality of predefined labels (26);
at least in part by inputting the data inputs (22) and the corresponding machine annotations (34) into a critic generative language model (40), obtaining a plurality of annotation critiques (44) that each include a respective error probability estimate (48) associated with the corresponding label (26);
selecting a first subset (60) and a second subset (66) of the plurality of data inputs (22) at least in part by:
computing a plurality of rescaled error probability estimates (50) based at least in part on the error probability estimates (48); and
sampling from a Bernoulli distribution (52) over the rescaled error probability estimates (50) to obtain the data inputs (22) included in the first subset (60), wherein the second subset (66) includes the data inputs (22) that are not included in the first subset (60);
transmitting the first subset (60) of the data inputs (22) to an annotation user interface (62);
receiving, via the annotation user interface (62), a respective plurality of human annotations (64) of the data inputs included in the first subset (60); and
training a machine learning model (72) via supervised learning (74) using a training dataset (70) that includes the plurality of data inputs (22), the respective human annotations (64) of the data inputs (22) included in the first subset (60), and the respective machine annotations (34) of the data inputs (22) included in the second subset (66).

11. The method of claim 13, wherein computing the rescaled error probability estimates (50) includes:
normalizing the error probability estimates (48); and
multiplying the normalized error probability estimates by a subset size cap (54), wherein the subset size cap (54) is a predetermined maximum number of the data inputs (22) included in the first subset (60).

12. The method of claim 13, wherein the rescaled error probability estimates (50) are computed as respective values of a sigmoid function (56B) of the error probability estimates (48); and/or wherein computing the rescaled error probability estimates (50) includes selecting the data inputs (22) with respective error probability estimates (48) above a predetermined probability threshold.

13. The method of claim 13, wherein the machine learning model (72) is trained with a loss function (76) that includes, for each of the data inputs (22):
a machine annotation loss (76A) computed for that data input (22); and
an annotation-difference loss (76B) proportional to a difference between a human annotation loss (76C) and the machine annotation loss (76A), multiplied by an error indicator (78) for that data input (22) and divided by the rescaled error probability estimate (50) for that data input (22).

14. The method of claim 13, further comprising, for each of the data inputs (22):
obtaining an annotator reasoning trace (36) from the annotator generative language model (30) when computing the machine annotation (34); and
computing the error probability estimate (48) based at least in part on the annotator reasoning trace (36);
and/or
further comprising computing the error probability estimates (48) of the data inputs (22) as normalized logit probabilities (48B) of the critic generative language model (40).

15. A computing system comprising:
one or more processing devices (12) configured to:
receive a plurality of data inputs (22);
receive a subset size cap (54);
at least in part by inputting the data inputs (22) into an annotator generative language model (30), obtain a respective plurality of machine annotations (34) that each include a corresponding label (26) selected from among a plurality of predefined labels (26);
at least in part by inputting the data inputs (22) and the corresponding machine annotations (34) into a critic generative language model (40), obtain a plurality of annotation critiques (44) that each include a respective error probability estimate (48) associated with the corresponding label (26);
select a first subset (60) and a second subset (66) of the plurality of data inputs (22), wherein:
the subset size cap (54) is a predetermined maximum number of the data inputs (22) included in the first subset (60);
the second subset (66) includes the data inputs (22) that are not included in the first subset (60); and
selecting the first subset (60) includes:
computing a plurality of rescaled error probability estimates (50) based at least in part on the error probability estimates (48) and the subset size cap (54); and
sampling over the rescaled error probability estimates (50) to obtain the data inputs (22) included in the first subset (60);
transmit the first subset (60) of the data inputs (22) to an annotation user interface (62);
receive, via the annotation user interface (62), a respective plurality of human annotations (64) of the data inputs (22) included in the first subset (60); and
train a machine learning model (72) via supervised learning (74) using a training dataset (70) that includes the plurality of data inputs (22), the respective human annotations (64) of the data inputs (22) included in the first subset (60), and the respective machine annotations (34) of the data inputs (22) included in the second subset (66).
